# EUROPÄISCHE PATENTANMELDUNG

(11) **EP 1 061 339 A1**
(43) Veröffentlichungstag der Anmeldung: **20.12.2000**
(21) Anmeldenummer: 00111734.0
(22) Anmeldetag: 02.06.2000
(51) Int. Cl.: G01C 21/36

(54) **Fahrzeugnavigationssystem**

(30) Priorität: 17.06.1999 DE 19927647
(71) Anmelder: GRUNDIG Aktiengesellschaft, 90471 Nürnberg (DE)
(72) Erfinder: Kays, Ruediger, Dr., 90762 Fürth (DE)

(57) **Zusammenfassung**

Die Erfindung betrifft eine Vorrichtung zur Eingabe von Daten in ein Fahrzeugnavigationsgerät, welches einen Navigationsrechner, einen Speicher für Landkartendaten und ein Display zur Anzeige von Navigationsdaten aufweist. Bei einer derartigen Vorrichtung weist das Navigationsgerät weiterhin eine Empfangsschnittstelle auf, über welche ihm Eingabedaten zuführbar sind. Diese Eingabedaten können von einem Datenbankgerät abgeleitet werden, in welchem die zur Durchführung eines Navigationsvorganges benötigten Adressendaten des Fahrtziels bereits abgespeichert sind.

## Beschreibung

Die Erfindung betrifft eine Vorrichtung zur Eingabe von Daten in ein Fahrzeugnavigationsgerät, welches einen Navigationsrechner, einen Speicher für Landkartendaten und ein Display zur Anzeige von Navigationsdaten aufweist.

Die Eingabe von alphanumerischen Zieldaten für Fahrzeugnavigationssysteme ist bei bisher bekannten Systemen aufwendig. Durch mühevolle Prozeduren mit Drehknöpfen oder Cursorkreuzen werden die Elemente von Adressen Buchstabe für Buchstabe eingegeben. Dieses Vorgehen ist umständlich und fehleranfällig.

Aus der DE 34 45 668 C1 ist eine Steuervorrichtung für ein Fahrzeug-Zielführungssystem bekannt. Dabei erfolgt eine Eingabe der Fahrtroute mittels eines transportablen Handgerätes, welches Eingabetasten, ein Display, einen Rechner und einen Straßenkartenspeicherchip aufweist. Mittels dieses Handgerätes können Daten fahrzeugunabhängig eingegeben werden. Zu Fahrtbeginn wird das Handgerät in eine Aussparung des Armaturenbrettes des Fahrzeugs eingesetzt.

Aus der DE 42 19 171 A1 ist eine Vorrichtung zur bildlichen Wiedergabe von Landkarten bekannt, wobei weiterhin Fahrtziele darstellbar sind. Die bekannte Vorrichtung weist einen Kartenspeicher auf, in welchem Kartendaten zur Darstellung auf einem Bildschirm abgespeichert sind. Weiterhin enthält die bekannte Vorrichtung ein Eingabepanel, mittels dessen Telefonnummern, ein Gebietscode oder Postcodes eingegeben werden können. In einem zweiten Speicher der bekannten Vorrichtung sind Telefonnummern mit ihren entsprechenden Positionskoordinaten auf der Karte, Informationen über Gebietscodes mit entsprechenden Positionskoordinaten auf der Karte und Informationen über Postcodes und die zugehörigen Positionskoordinaten auf der Karte enthalten. Dadurch ist eine Zuordnung der mittels des Bedienpanels eingegebenen Daten zu einem bestimmten Kartenbereich der abgespeicherten Landkarte möglich.

Weiterhin sind aus der Zeitschrift 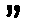 Funkschau", Heft 7, 1997, Seite 78-81, bereits PDA's bekannt. Diese Persönlichen Digitalen Assistenten sind kleine, tragbare Computer, welche Eingabemittel, eine Rechnereinheit und ein Display aufweisen. Die Eingabemittel können eine Tastatur, Mittel zur Sprach- oder Schrifterkennung oder eine Infrarot-Schnittstelle sein. Weiterhin können PDA's einen Mobiltelefon-Anschluß aufweisen.

Ausgehend von diesem Stand der Technik liegt der Erfindung die Aufgabe zugrunde, eine Vorrichtung zur Eingabe von Daten in ein Fahrzeugnavigationsgerät anzugeben, bei welcher die Dateneingabe im Vergleich zu bekannten Dateneingabevorrichtungen verbessert ist.

Diese Aufgabe wird durch eine Vorrichtung mit den im Anspruch 1 angegebenen Merkmalen gelöst. Vorteilhafte Ausgestaltungen und Weiterbildungen der Erfindung sind in den abhängigen Ansprüchen angegeben.

Die Vorteile der Erfindung bestehen insbesondere darin, daß die Eingabedaten dem Navigationsgerät nicht mühsam Buchstabe für Buchstabe eingegeben werden müssen, sondern komplett als Datensatz von einem anderen Gerät übernommen werden können, wo sie möglicherweise ohnehin bereits elektronisch abgelegt sind.

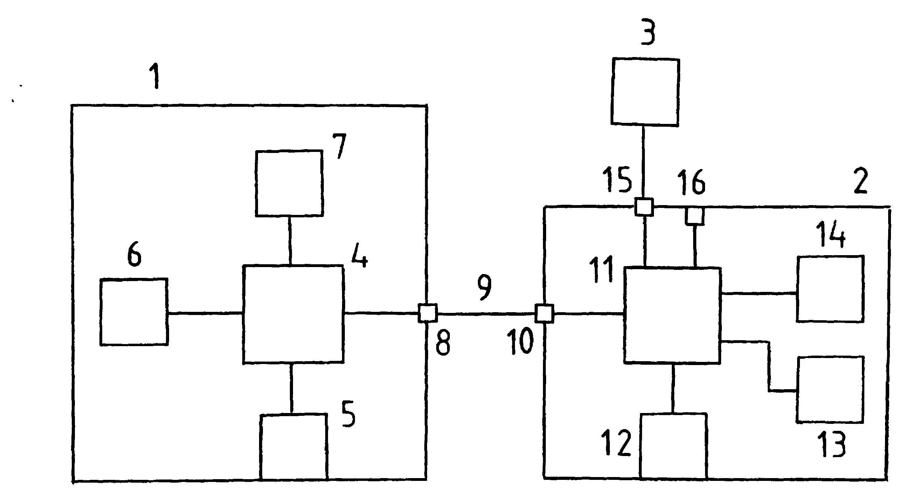

Weitere vorteilhafte Eigenschaften der Erfindung ergeben sich aus der Erläuterung eines Ausführungsbeispiels anhand der Figur. Diese zeigt eine Vorrichtung zur Eingabe von Daten in ein Fahrzeugnavigationsgerät 1, welches in einen Einbauschacht des Armaturenbrettes eines Fahrzeugs eingesetzt ist.

Das dargestellte Navigationsgerät 1 weist einen Navigationsrechner 4 auf, welcher mit einer Eingabetastatur 5, einem Speicher 6 für Landkartendaten, einem Display 7 zur Anzeige von Navigationsdaten und einer Schnittstelle 8 verbunden ist.

Diese Schnittstelle 8 ist eine Empfangsschnittstelle, über welche dem Fahrzeugnavigationsgerät 1 Eingabedaten zuführbar sind. Die Eingabedaten entsprechen vorzugsweise alphanumerischen Fahrtzieldaten. Sie enthalten Informationen über den Namen des Zielortes, seine Postleitzahl, seine Telefonvorwahl und gegebenenfalls auch Angaben über die Straße innerhalb des Zielortes.

Die Empfangsschnittstelle 8 ist vorzugsweise eine Infrarot-Schnittstelle, kann aber gemäß anderer Ausführungsbeispiele der Erfindung auch eine Hochfrequenz-Schnittstelle oder eine Eingangsbuchse sein.

Die genannten Eingabedaten werden der Empfangsschnittstelle 8 über eine Übertragungsstrecke 9 zugeführt, welche in Abhängigkeit von der Realisierung der Empfangsschnittstelle 8 eine Infrarot-Übertragungsstrecke, eine Hochfrequenz-Übertragungsstrecke oder ein Übertragungskabel sein kann.

Als Datenquelle für die Eingabedaten dient ein Datenbankgerät 2, welches vorzugsweise ein Persönlicher Digitaler Assistent ist, dessen Abkürzung PDA lautet.

Das Datenbankgerät 2 weist eine Rechnereinheit 11 auf, welche mit einer Ausgangsschnittstelle 10, einer Eingabetastatur 12, einem Speicher 13, einem Display 14, einer Eingangsschnittstelle 15 und einem Datenlesegerät 16 verbunden ist. Die Eingangsschnittstelle 15, bei der es sich um eine übliche Computerschnittstelle handelt, ist über ein Kabel mit einem externen Computer 3 verbindbar.

Der Speicher 13 des Datenbankgerätes 2 enthält einen Speicherbereich, in welchem Adressendaten abgespeichert sind. Diese Adressendaten können die Namen von Firmen und Privatpersonen, deren Sitz bzw. Wohnort, die Postleitzahlen, die Straßennamen und die zugehörigen Telefonnummern enthalten. Die Adressendaten sind im genannten Speicher 13 in Form von Datensätzen abgespeichert, die einzeln oder in Form einer alphabetischen Liste auf dem Display 14 angezeigt werden können.

Mittels der Bedientastatur 12 des Datenbankgerätes 2, die auch Cursortasten aufweist, kann auf dem Display 14 ein Datensatz markiert werden, der einer gewünschten Adresse entspricht. Diese Adresse ist das gewünschte Fahrtziel, zu welchem sich der Benutzer durch das Navigationssystem leiten lassen möchte.

Wird nach der Markierung des genannten Datensatzes eine Sendetaste der Bedientastatur 12 betätigt, dann erfolgt eine Übertragung der zu einer Navigation notwendigen Bestandteile des Datensatzes über die Ausgangsschnittstelle 10 und die Übertragungsstrecke 9 an das Navigationsgerät 1. Die zu einer Navigation notwendigen Bestandteile sind der Name des Zielortes, seine Postleitzahl, seine Telefonvorwahl und gegebenenfalls auch die zugehörige Straße.

Anhand dieser Daten, die im Navigationsgerät 1 abgespeichert werden, ermittelt der Navigationsrechner 4 die Navigationsdaten, die auf dem Display 7 angezeigt werden und den Benutzer während der Fahrt zum gewünschten Zielort leiten. Dabei macht der Navigationsrechner 4 von den im Speicher 6 abgespeicherten Landkartendaten Gebrauch. Diese enthalten unter anderem eine Auflistung sämtlicher Ortsnamen des Bundesgebietes mit zugehöriger Postleitzahl, zugehöriger Telefonvorwahl, zugehörigem Straßenverzeichnis und den zugehörigen Ortskoordinaten. Dadurch können anhand der über die Übertragungsstrecke 9 übermittelten Adressendaten zugehörige Ortskoordinaten ermittelt und zur Generierung von Navigationsdaten verwendet werden.

Eine vorteilhafte Weiterbildung der Erfindung besteht darin, die übermittelten Adressendaten mittels des Navigationsrechners 4 anhand der im Speicher 6 abgespeicherten Landkartendaten auf ihre Plausibilität zu überprüfen. Werden fehlerhafte Daten erkannt, dann kann mittels des Navigationsrechners 4 eine automatische Korrektur der Adressendaten vorgenommen und gegebenenfalls auch eine entsprechende Fehlermeldung auf dem Display 7 des Navigationsgerätes 1 und/oder dem Display 14 des Datenbankgerätes 2 initiiert werden.

Nach der Übermittlung der Adressendaten vom Datenbankgerät 2 an das Navigationsgerät 1 kann die Verbindung zwischen diesen beiden Geräten entweder abgebrochen werden oder auch aufrechterhalten werden.

In vorteilhafter Weise kann die Übertragungsstrecke 9 zwischen dem Navigationsgerät 1 und dem Datenbankgerät 2 zu einer bidirektionalen Datenübertragung vorgesehen sein. Dies ermöglicht es, die im Navigationsgerät 1 generierten Navigationsdaten, bei denen es sich um Fahrtrichtungspfeile oder alphanumerische Hinweise handeln kann, auf dem Display 14 des Datenbankgerätes 2 darzustellen. Dieses Display ist im allgemeinen größer ausgebildet als das Display des Navigationsgerätes. Weiterhin kann auch der Beifahrer das Display des Datenbankgerätes unmittelbar vor sich halten und die dort dargestellten Navigationsdaten dem Fahrer in verbaler Form übermitteln. Dadurch wird der Fahrer nicht so sehr vom Verkehrsgeschehen abgelenkt.

Die im Speicher 13 des Datenbankgerätes 2 abgespeicherten Adressendaten können einer Visitenkarte entnommen sein. Diese Visitenkarte wird in einen Visitenkarteneingabeschlitz des Datenbankgerätes 2 eingeführt. Dort erfolgt mittels des Datenlesegerätes 16 ein Lesen der Daten von der Visitenkarte und eine Weiterleitung der Daten über die Rechnereinheit 11 an den Speicher 13. Weiterhin können die Adressendaten auch mittels des externen Computers 3 generiert und dem Datenbankgerät 2 über dessen Eingangsanschluß 15 zugeführt werden. Ferner können die Adressendaten auch handschriftlich über ein Eingabefeld des Datenbankgerätes 2 eingegeben, von einer Vorrichtung zur Schrift- oder Mustererkennung ausgewertet und dann im Speicher 13 abgespeichert werden. Dabei kann die Qualität der Schriftzeichen- oder Mustererkennung durch eine Verwendung der im Speicher 6 des Navigationsgerätes 1 abgespeicherten Landkartendaten als Referenzdaten, die dem Datenbankgerät 2 über die Übertragungsstrecke 9 zugeführt werden, verbessert werden.

Die Schnittstelle 10 des Datenbankgerätes 2 ist in Abhängigkeit von der Realisierung der Schnittstelle 8 des Navigationsgerätes 1 entweder eine Infrarot-Schnittstelle, eine Hochfrequenz-Schnittstelle oder eine Anschlußbuchse.

In einer vorteilhaften Ausgestaltung der Erfindung ist das Display 7, die Eingabetastatur 5 und der Navigationsrechner 4 des Navigationsgerätes 1 durch das Display 14 die Eingabetastatur 12 und der Recheneinheit 11 das Datenbankgerätes 2 ersetzt. Hierbei ist vorteilhaft, daß teure Komponenten, wie etwa ein Display nur einmal eingesetzt ist und folglich zu einer Kostenreduktion des Systems führt. Im weiteren ist zugleich ein Diebstahlschutz für das Navigationsgerät 1 gewährleistet, wenn bei verlassen des Fahrzeuges das Datenbankgerät 2 von Nutzer mitgenommen wird. Außerdem ist die Nutzer in der Lage seine das Datenbankgerät 2 mit sich zu führen und seine persönlichen Daten, auch außerhalb des Fahrzeuges zu pflegen. Bei erneuter Kopplung des Datenbankgerätes 2 an das Navigationsgerät 1 sind neue aktuelle Daten verfügbar.

Die Erfindung macht nach alledem davon Gebrauch, daß für einen Navigationsvorgang vom Navigationsrechner eines Fahrzeugnavigationsgerätes benötigte Eingabedaten bereits an anderer Stelle vorhanden sind oder mittels eines anderen Gerätes in einfacher Weise generiert werden können. Diese Eingabedaten werden dem Navigationsgerät 1 über dessen Schnittstelle 6 in Form eines Datensatzes übermittelt.

## Patentansprüche

1. Vorrichtung zur Eingabe von Daten in ein Fahrzeugnavigationsgerät, welches einen Navigationsrechner, einen Speicher für Landkartendaten und ein Display zur Anzeige von Navigationsdaten aufweist,
**dadurch gekennzeichnet, daß**
das Navigationsgerät (1) mit einer Empfangsschnittstelle (8) versehen ist, über welche ihm Eingabedaten zuführbar sind.

2. Vorrichtung nach Anspruch 1,
**dadurch gekennzeichnet, daß**
das Fahrzeugnavigationsgerät (1) ein in einen Einbauschacht des Armaturenbrettes des Fahrzeugs eingesetztes Gerät ist.

3. Vorrichtung nach Anspruch 1 oder 2,
**dadurch gekennzeichnet, daß**
die Empfangsschnittstelle (8) eine Hochfrequenz-Schnittstelle, eine Infrarot-Schnittstelle oder eine Eingangsbuchse ist und die Empfangsschnittstelle (8) zur Eingabe von Daten vorgesehen ist, die einem Fahrtziel entsprechen und die Eingabedaten alphanumerischen Daten entsprechen.

4. Vorrichtung nach einem der vorhergehenden Ansprüche,
**dadurch gekennzeichnet, daß**
sie als Datenquelle für die Eingabedaten ein Datenbankgerät (2) aufweist und das Datenbankgerät (2) einen Hochfrequenzsender, einen Infrarotsender oder eine Ausgangsbuchse aufweist und/oder das Datenbankgerät (2) ein PDA ist.

5. Vorrichtung nach Anspruch 4,
**dadurch gekennzeichnet, daß**
das Datenbankgerät (2) eine Tastatur (12) zur Eingabe von Daten, Mittel zur Schrifterkennung oder Mittel zur Mustererkennung aufweist.

6. Vorrichtung nach einem der Ansprüche 4-5,
**dadurch gekennzeichnet, daß**
das Datenbankgerät (2) einen Dateneingangsanschluß (15) aufweist und der Dateneingangsanschluß (15) eine Computerschnittstelle oder ein Visitenkarteneingabeschlitz ist.

7. Vorrichtung nach einem der Ansprüche 4-6,
**dadurch gekennzeichnet, daß**
das Datenbankgerät (2) einen Speicher (13) aufweist, der zur Abspeicherung der Eingabedaten vorgesehen ist und das Datenbankgerät (2) eine Bedientastatur (12) aufweist und eine der Bedientasten der Bedientastatur eine Sendetaste ist, deren Betätigung eine Übertragung von im Speicher (13) des Datenbankgerätes (2) abgespeicherten Eingabedaten zum Fahrzeugnavigationsgerät (1) auslöst und/oder das Datenbankgerät (2) ein Display (14) aufweist, das Display (14) zur Anzeige der Eingabedaten vorgesehen ist und mittels der Bedientastatur (12) auf dem Display (14) angezeigte Eingabedaten zum Zwecke einer Übertragung zum Fahrzeugnavigationsgerät (1) auswählbar sind.

8. Vorrichtung nach einem der Ansprüche 4-7,
**dadurch gekennzeichnet, daß**
zwischen dem Fahrzeugnavigationsgerät (1) und dem Datenbankgerät (2) eine bidirektionale Übertragung von Daten erfolgt und das Display (14) des Datenbankgerätes (2) zur Darstellung von Navigationsdaten dient.

9. Vorrichtung nach einem der Ansprüche 4-8,
**dadurch gekennzeichnet, daß**
der Navigationsrechner (4) des Fahrzeugnavigationsgerätes (1) derart programmiert ist, das er Eingabedaten unter Verwendung der im Speicher (6) für Landkartendaten abgespeicherten Daten auf Plausibilität prüft und der Navigationsrechner (4) fehlerhafte Eingabedaten automatisch korrigiert oder beim Vorliegen fehlerhafter Eingabedaten die Anzeige eines Fehlersignals auf dem Display (7) des Fahrzeugnavigationsgerätes (1) oder dem Display (14) des Datenbankgerätes (2) initiiert.
